# EUROPEAN PATENT SPECIFICATION

(11) **EP 1 356 205 B1**
(45) Date of publication and mention of the grant of the patent: **28.02.2007**
(21) Application number: 01270702.2
(22) Date of filing: 13.12.2001
(51) Int. Cl.: F03D 11/04, B63B 35/00, B63B 9/06, E02B 17/00

(54) **METHOD AND APPARATUS FOR PLACING AT LEAST ONE WIND TURBINE ON OPEN WATER**
VERFAHREN UND VORRICHTUNG ZUR ANORDNUNG MINDESTENS EINER WINDTURBINE AN OFFENEM WASSER
PROCEDE ET DISPOSITIF POUR LA MISE EN PLACE D'AU MOINS UNE EOLIENNE EN MER LIBRE

(30) Priority: 13.12.2000 NL 1016859
(43) Date of publication of application: 29.10.2003
(73) Proprietor: Mammoet Marine B.V.I.O., 3115 HK Schiedam (NL)
(72) Inventor: SEEGERS, Raymond, Christiaan, NL-4921 KS Made (NL); HOLTHAUSEN, Erik, Johannes, Maria, NL-7077 AE Netterden (NL)
(74) Representative: Prins, Adrianus Willem
(86) International application number: PCT/NL2001/000907
(87) International publication number: WO 2002/048547

(56) References cited:
- EP-A- 0 094 434
- EP-A- 1 101 935
- GB-A- 2 327 449
- NL-A- 8 800 523
- US-A- 3 790 009
- US-A- 4 633 778

## Description

The invention relates to a method for placing at least one windmill on open water. The invention particularly relates to such a method for placing a windmill farm at sea. Such a method is known from practice (eg: GB-A-2327449).

In the known method, parts of a windmill are shipped, with the aid of a vessel, to a set-up location on open water, for instance a foundation built up on the sea floor. With the aid of a jack-up platform with crane, the parts are hoisted onto the foundation and assembled so as to form the desired windmill. Such a method has as a drawback that it requires relatively many shipping movements, while, for each windmill, the jack-up platform has to be brought into a floating position, has to be shipped to a subsequent set-up position and there has to be brought back into a position in which the platform extends entirely above the water. A further drawback of this method is that with a jack-up platform, only relatively small loads can be carried and the effective surface of such a platform is relatively small, so that only few parts can be placed thereon. Moreover, with this known method, employees have to work at relatively high altitude when assembling the windmill, to which altitude they have to be brought above open water with a crane or by climbing the windmill. In particular in unstable weather this is dangerous, particularly because of occurring swinging movements of the crane and the cages carried by cables in which the employees are received.

The invention contemplates a method of the type described in the preamble, wherein the drawbacks mentioned are obviated, while maintaining its advantages. To that end, a method according to the invention is characterized by the features of claim 1.

Using a vessel for shipping windmills to one or more set-up locations, which windmills have already at least for the larger part and preferably completely been assembled prior to shipping, and which can be placed in a simple manner on foundations already installed, offers the advantage that assembly of the windmills on open water is no longer necessary, at least that operations on open water are reduced to a minimum. The windmills are already assembled on land or near land and, supported by stages, arranged on the vessel. Assembly above land has the advantage that the working conditions are better controllable there, for instance by building in auxiliary stages, by using scaffoldings and the like. Swinging movements of cranes and the like as a result of swell are then precluded. Furthermore, thus, the advantage is achieved that the windmills can already be assembled, in advance, also during a season when assembly on open water is virtually or completely impossible due to swell, wind, temperature and such weather conditions. Placing the or each windmill during the suitable season can then be done rapidly, with relatively few shipping movements. Surprisingly, it has been found to be relatively easy to hoist the windmills from the vessel in assembled condition and to place them onto the foundations with great accuracy.

In an advantageous embodiment, a method according to the invention is further characterized by the features of claim 3.

Stabilization of the vessel by supporting it on the floor of the open water offers the advantage that influences of movements of water on the vessel are considerably reduced. By subsequently lifting the vessel at least slightly out of the water and thus reducing its draft, the influence of the movements of water is virtually completely eliminated.

In a method according to the invention, the vessel can be partly lifted out of the water, whereby the draft is reduced, for instance, between 20% and 75%, thus achieving the advantage that the hoisting device can be designed to be relatively light, while still a substantially more stable position is obtained. In particular when several windmills are taken along simultaneously, this is particularly advantageous. An outstanding stabilization with a suitable lifting device for the vessel can be achieved by lifting the vessel out of the water by between 20% to 50%.

The vessel can also be arranged such that the vessel is, at least can be completely lifted above the water. Thus, the influence of the wave motion is even further reduced.

It is preferred that the vessel in lifted position be actively stabilized in particular when it is lifted out of the water only partly, by continuously monitoring and, if necessary, adjusting the pressure force of the legs on the basis of the wave motions and tidal movements, for instance with hydraulic or pneumatic means.

In a further advantageous embodiment, a method according to the invention is characterized by the features of claim 6.

As a result, the windmills and the hoisting device can be transported to the set-up location simultaneously, so that the number of shipping movements is still further reduced, while, furthermore, fewer vessels are required. Further, in this manner, the advantage is achieved that, each time, a hoisting device is available at the appropriate location, for instance also during shipping.

Preferably, the windmills are built up in the stages and wheeled onto the deck of the vessel. Then, preferably, two, three or four windmills are assembled next to each other in a stage, while a series of stages can be built up on the deck of the vessel, with, for instance, eight or ten completely built-up windmills. It is then preferred that a larger number of stages are used than are carried on the vessel. Then, in a number of the stages, on the quay, windmills are built up which, upon return of the vessel and the unloading of the empty stages, can be placed, in particular, wheeled onto the vessel, while in the empty, unloaded stages, once again, windmills can be built up. It will be clear that, thus, a complete windmill farm can be built up even more rapidly.

The invention further relates to an apparatus for placing at least one windmill on open water, characterized by the features of claim 11.

With such an apparatus, in a simple and rapid manner, with good working conditions, in a safe and economical manner, one or more windmills can be placed on open water.

A vessel according to the invention is preferably provided with means, in particular legs, with which it can be supported on the floor of this open water, as well as with means for lifting the vessel out of the water to some extent, such that its draft is at least reduced, for instance by 10, 20 or 50%, to be selected, for instance, depending on the load, the swell and further weather conditions and the like. By continuously monitoring and correcting the occurring forces on the legs, the possibility is provided to keep the vessel always in the desired position. Thus, in a simpler manner, it becomes possible to take up and place the at least substantially assembled windmills on the foundation with the hoisting device with great, at least sufficient accuracy.

Preferably, with a device according to the invention, a pontoon is used, in particular a pontoon with a relatively flat deck, which offers sufficient space for, for instance, six, eight or ten windmills, arranged in stages, as well as for a suitable hoisting device, for instance a mobile crane. Such pontoons are known per se and can be provided in a relatively simple manner with, for instance, legs and stabilizing means according to the invention.

Further advantageous embodiments of a method and device according to the invention are given in the further subclaims. In clarification of the invention, a method and device according to the invention are further elucidated with reference to the drawing.

In the drawing:
Fig. 1 shows a windmill under construction, on a quay;
Fig. 2 shows a top plan view of a windmill under construction according to Fig. 1;
Fig. 3 shows, in perspective view, a windmill under construction, in a stage, according to Figs. 1 and 2;
Fig. 4 shows, in top plan view, a vessel according to the invention, with eight windmills in stages;
Fig. 5 shows, in side view, a vessel according to Fig. 4;
Fig. 6 shows, in side view, a vessel according to Fig. 5, in a position partly lifted out of the water and stabilized, at a windmill park under construction, with the aid of a device and method according to the invention;
Fig. 7 schematically shows, in side view, a leg with adjusting means for a vessel according to the invention;
Fig. 8 shows in perspective view, schematically, a leg with adjusting means, in further elaboration; and
Fig. 9 shows, in perspective, partly cutaway view, a buffer system for a leg according to Fig. 7 or 8.

In this description, identical or corresponding parts have identical or corresponding reference numerals. In this drawing, one type of windmill is the starting point, to which the device, in particular the or each stage, has been adjusted. It will be clear that for any type of windmill a suitable stage can be built up. In the embodiments shown, the windmills are built up and transported in substantially vertical, upright position. Thus, in a particularly advantageous manner, use can be made of the deck space of the vessel. Moreover, thus, damage to in particular the generators of the windmills is prevented. Due to the generators used, many types of windmills are not to be transported in horizontal position. However, it will be clear that, with suitable windmills, also wholly or partly horizontal positions can be used in the stages, for instance for lowering the center of gravity of the vessel with the windmills or for reducing the building costs of the stages.

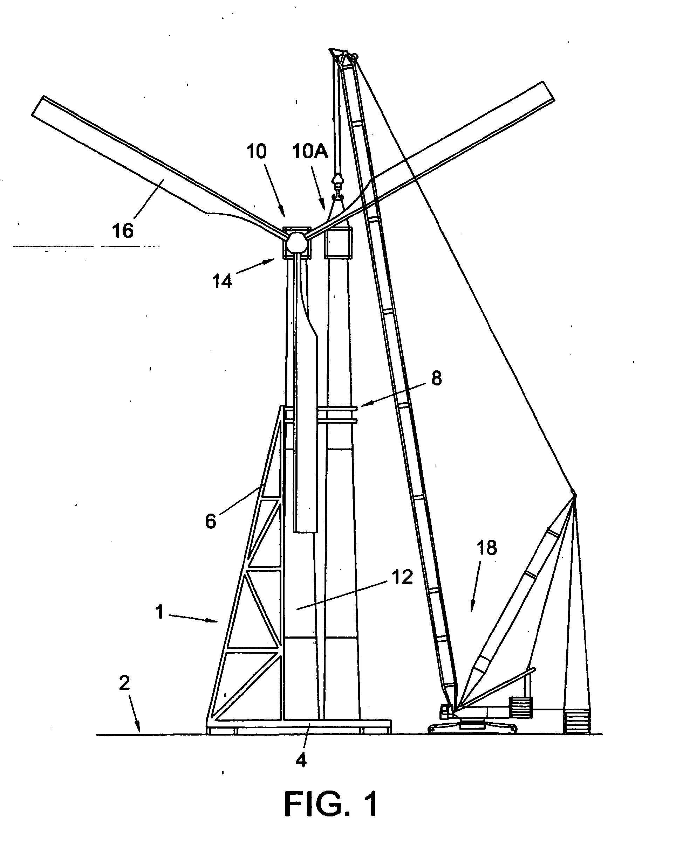

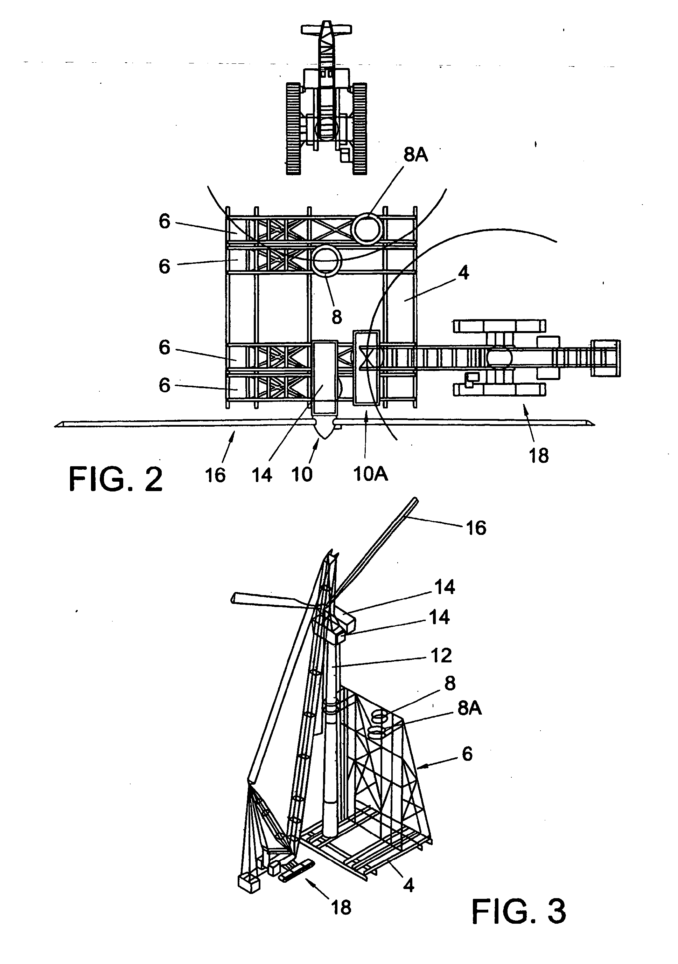

In Fig. 1 a stage 1 is shown, which rests on a quay 2. The stage 1 comprises a platform 4 having thereon, in side view, triangular supports 6, which, adjacent the top end, carry four brackets 8. The brackets 8 extend above the platform 4. As is clear from Fig. 2, the platform 4 is built up from a construction of profiles, wherein, next to each other, two pairs of supports 6 are arranged, each support carrying a bracket 8. Two brackets 8 are attached directly against the supports 6, while two neighboring brackets 8A are situated at some distance from the support 6. On the platform 4, four windmills 10 can be built up, each supported by a bracket 8, 8A. In the Figs. 1 - 3, each time, a fully built up windmill 10 is shown, as well as a second windmill 10A which is under construction. The windmills are substantially built up from a column 12, a generator 14 and vanes 16, in a manner known per se. The bracket 8 engages the column 12, for instance slightly above the middle, viewed in vertical direction, while the leg 12 is attached to the platform 4. In this condition, the windmill 10 is secured in the stage 1 and can be moved therewith.

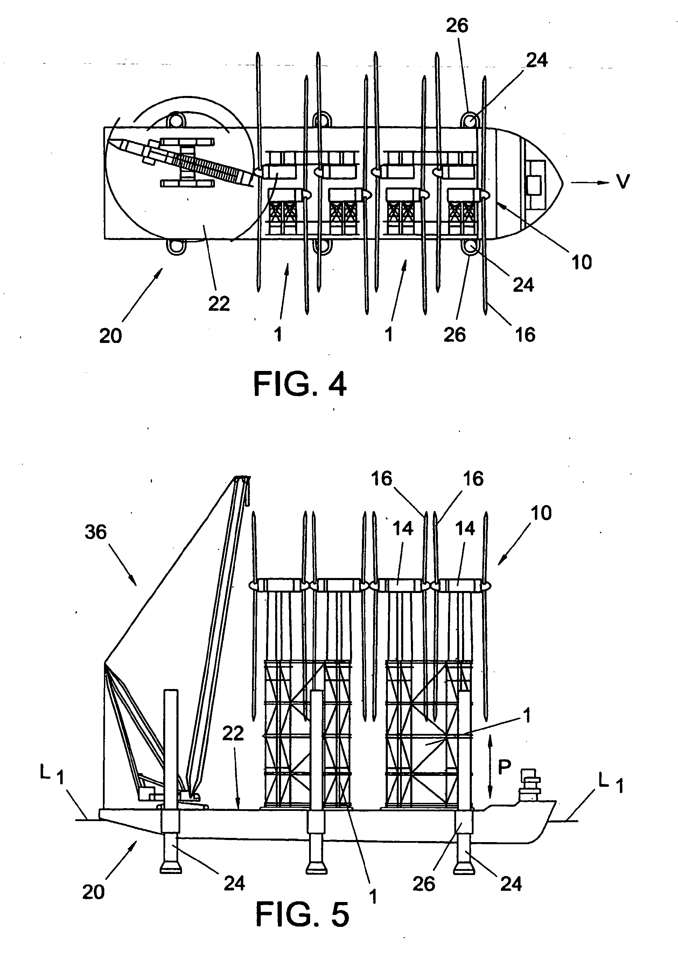

As is clear from Fig. 1, the windmill 10, 10A can be built up with the aid of a mobile crane 18, also in a manner known per se. To this end, different auxiliary means can be used, for instance temporary auxiliary constructions, lift cars and the like, such, that assembly is safe, under ergonomically sound conditions. As the brackets 8, 8A are arranged in a staggered relation to each other, while two of the windmills 10 are arranged having the vanes facing outward and the other two windmills are arranged having the vanes facing each other, in the stage 1, as is clear from for instance Fig. 4, four windmills 10 can be arranged in a relatively compact stage 1.

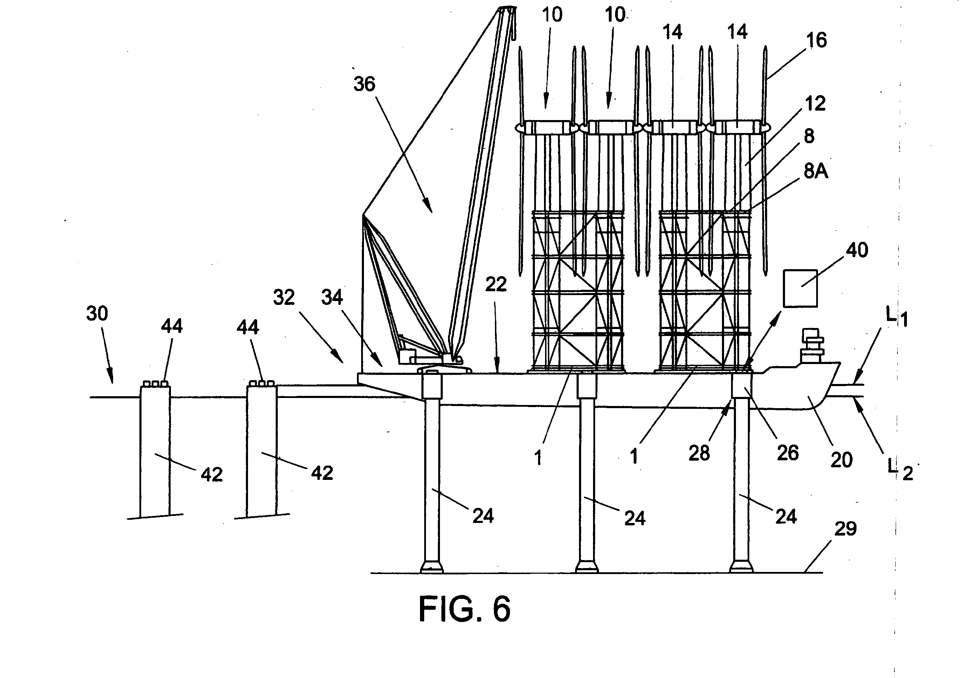

After the windmills 10 have been assembled on the stage 1 and have been anchored thereto, the stage 1 with the windmills 10 mentioned can be taken up and be or hoisted onto the deck of a vessel 20, as shown in Figs. 4 - 6. This vessel 20 is, for instance, a pontoon with a substantially flat deck 22. Viewed in the sailing direction V, on both sides of the pontoon 20, a series of legs 24 are provided, which legs are adjustable within guiding constructions to be called sleeves connected to the pontoon or integrated therein. With the aid of hydraulic means, the legs can be moved in vertical direction P, between an at least virtually completely raised position shown in Fig 5 and an at least virtually completely extended position shown in Fig. 6, while the legs 24 can rest on the floor 29 of an open water 30, for instance the sea. This will be elaborated further.

As is clear from Figs. 4 - 6, for instance two stages 1, each with four windmills 10 can be placed on the deck 22, for instance such, that a part 34 of the deck adjacent the stern 32 or, for instance a middle part of the deck between the stages, at least the respective deck space, remains clear of the stages. On this part 34, a hoisting device is placed, such as a mobile crane 36, for instance comparable to or a heavier type than the crane 18 as used on the quay 2. During sailing of the pontoon, the crane 36 is secured to the deck 22, while after release, it can be wheeled over the deck 22.

After the stages 1 have been placed on the deck 22, as well as the crane 36, the pontoon 20 can be shipped, for instance be towed, to open water with the aid of tugboats appropriate to that end. Having arrived at the set-up positions where the windmills are to be placed, the pontoon is stopped, whereupon the legs 24 are brought to the extended position shown in Fig. 6, such that the pontoon 20 is lifted somewhat, so that its draft diminishes. In Fig. 6, the water line L₁ is shown during shipping of the pontoon, as well as the water line L₂, when the pontoon 20 is somewhat lifted in the water. The draft can be reduced by, for instance, 10%, 20% or 50%, but can also be reduced much more, depending on the legs 24, guiding construction 26 and, for instance, hydraulic operating means for the legs 24 used. As an illustration, with a pontoon 20, according to the invention, the draft can for instance be reduced from 2.5 meters to 2 meters. However, this should not be taken as being limitative in any way. Preferably, the complete vessel can be lifted above the water.

With the aid of the legs 24 and the guiding constructions 26, as well as, in particular, the hydraulic means 28, the pontoon 20 in the lifted position shown in Fig. 6 can be adjusted such, that the deck 22 is always level. To that end, control means 40 are provided with which, periodically or, preferably, continuously, the hydraulic pressures can be checked and means 28 can be controlled for maintaining the deck 22 in the desired, preferably level position. As the pontoon 20 is stabilized on the seafloor 29, this is possible in a relatively easy manner, in particular as the pontoon 20 with the load resting thereon is somewhat or, possibly completely, lifted above the water surface, so that wave motion has little or even virtually no influence thereon. As the deck 22 can constantly be held virtually level, at least virtually steady, the crane 36 can be released so that with the crane 36, the windmills 10 can be lifted from the stages 1 and be placed on the foundations 42, which have been previously disposed on the floor 29 in the open water 30 and reach, preferably, above the water level L₂. The windmills 10 can be secured thereto in a manner known per se, for instance with bolt connections 44. Each time a windmill 10 is placed on a respective foundation 42, the pontoon can be brought to the initial position by retracting the legs 24, and can be sailed to a successive set-up location, where, in the same manner, a next windmill 10 can be placed on a foundation 42. In this manner, with a pontoon 20 according to the invention, series of windmills can be placed on series of foundations 24 in a simple manner. Here, virtually no assembly on or above open water is required, so that placement is made possible in a very safe manner. In particular because the pontoon 20 can be stabilized on the seafloor 29, undesirably large swinging movements of the windmills 10 during positioning are prevented, so that accurate placement is possible. Naturally, the windmills can there be guided, for instance by cables, rods or the like, from the deck 22. However, this will often not be necessary.

In an advantageous embodiment of a method according to the invention, on the quay 2 in a stage 1 windmills 10 are assembled, while, with the vessel 20, simultaneously, a series of windmills 10 are placed on foundations 42. Upon returning at the quay 2, the then prepared stages 1 with windmills 10 can be brought onto the deck 22, in exchange for the then empty stages 1 on the vessel 20. As a result, a substantially continuous process can be obtained, so that, rapidly, large series of windmills can be disposed on open water 30.

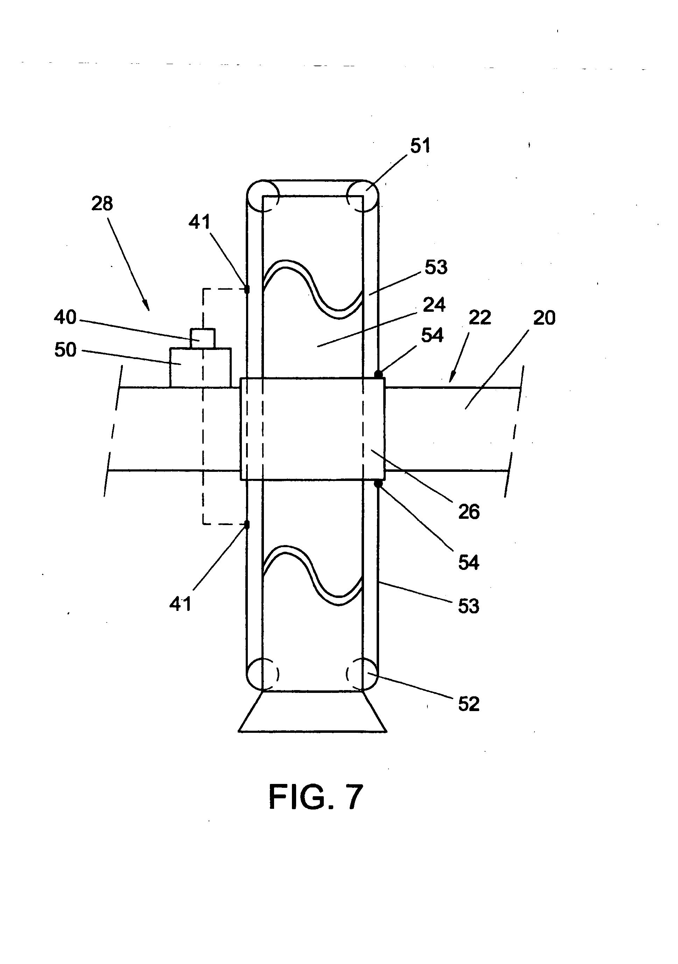

In Fig. 7, schematically, a leg 24 with guiding construction 26 and adjusting means 28 is shown. In this embodiment, on the deck 22 a winch 50 is arranged, coupled to the control means 40. Adjacent the upper side of the leg 24, first guide pulleys 51 are provided and, adjacent the lower side of the leg, second guide pulleys 52. Cables 53 extend from the winch 50 over the upper guide pulleys 51 and the lower guide pulleys 52 and are coupled by their free ends, via fastening elements 54, to sleeves 26, at least the pontoon 20. Sensors 41 are coupled to the wires 53 with which, continuously, the occurring forces in the cables can be measured. Herewith, each time, the reactive forces in the cables as a result of, for instance, wave motions and the like can be registered, on the basis of which the winch 50 can be operated for, each time, keeping the legs 24 in the desired position. The fact is that with the aid of the winch 50, the cables 53 can be adjusted, so that, within the sleeve 26, the leg 24 can be adjusted relative to the deck 22. Naturally, in a comparable manner, also other sensors can be used, for instance within the sleeves 26, for measuring reactive forces. Also, other adjusting means 28 can be used, for instance hydraulic cylinders, toothed racks with fitting driving chain wheels or the like. With a vessel according to the invention, preferably each leg 24 is provided with adjusting means 28, which are controllable independently of each other, while, preferably, the control means 40 of the adjusting device 28 are mutually coupled, so that a central control can be obtained and the vessel can always be held in the desired position.

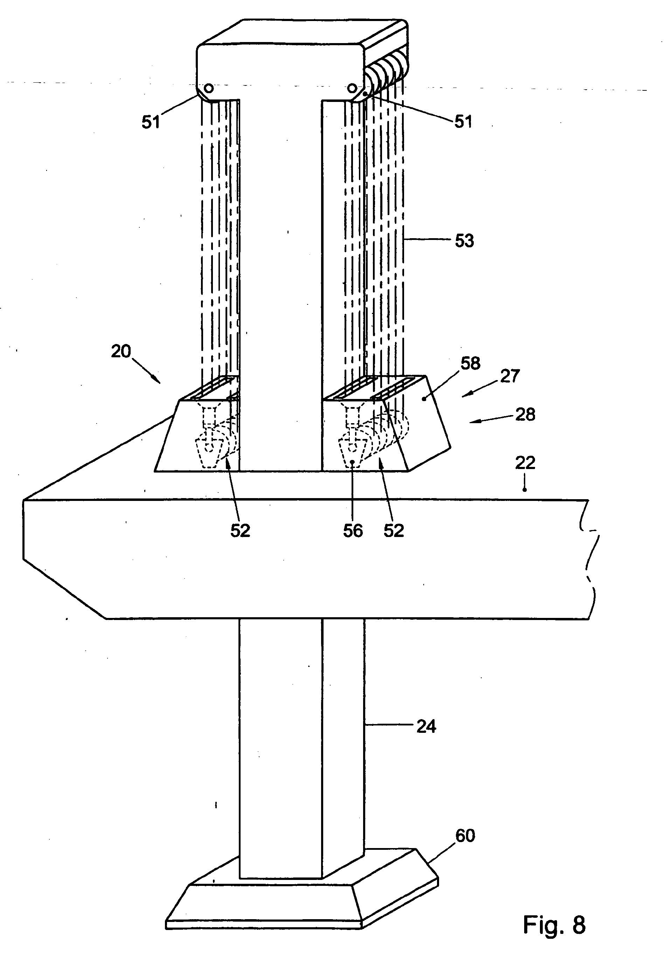

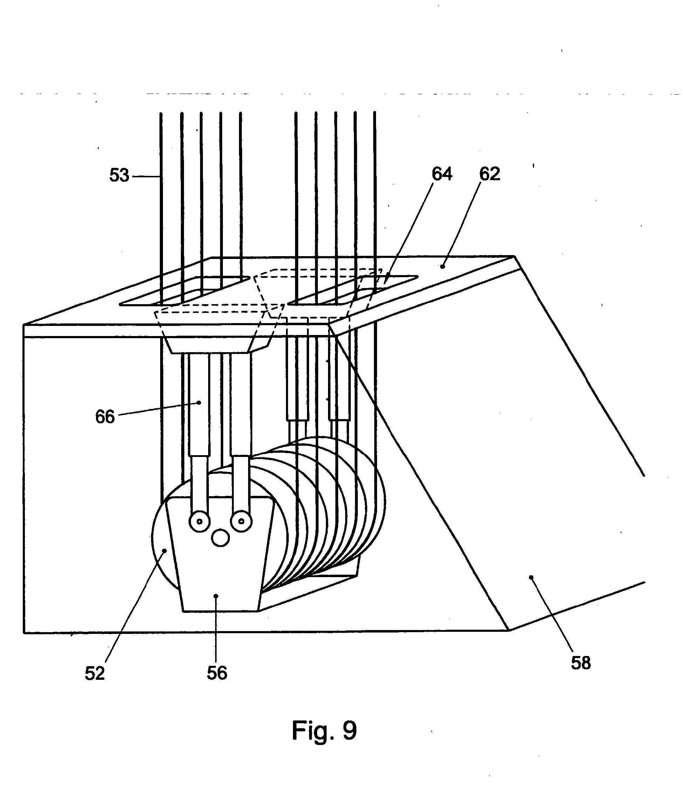

Fig. 8 schematically shows, in perspective view, a part of a pontoon 20 with leg 24, with a buffer system with which in particular impact forces occurring on the legs while placing them on the seafloor, can be compensated. Such forces are usually indicated as bouncing forces and, generally, form the boundaries within which a vessel can be used in waves. With the aid of the buffer means 27, these bouncing forces can be compensated so that a larger area of application is obtained. In Fig. 9, somewhat enlarged and partly see through, a part of the buffer means 27 is shown, in particular a casing 58 provided adjacent the deck 22, with, included therein, a block 56 in which a series of second pulleys 52 are included, over which winch wires 53 are guided which, as is shown in Fig. 8, are attached over first pulleys 51 adjacent the upper end of the pole 24. In Fig. 8, on both sides of the leg 24, a casing 58 with block of pulleys 56 is shown, so that a symmetrical load is obtained.

With the aid of a number of, in the shown embodiment four, cylinders 66, each block 56 is suspended to the upper plate 62 of the casing 58. The cylinders 66, two on each side of each block 56, are preferable double-acting and can be connected to a storage barrel as accumulator (not shown). Herewith, each block 56 is movable in a substantially vertical direction and damped, so that vertically occurring forces as a result of, for instance, impact forces on the leg 24 and/or the deck 22, at least the pontoon 20, can be taken up without undesirably great tensile forces occurring in the cables 53. The cylinders 66 can be filled with a gas, for instance nitrogen, or a liquid, for instance hydraulic oil. It will be clear that, to that end, any suitable fluid can be used.

The buffer means 27 as shown in Figs. 8 and 9 can be combined with adjusting means 28, as described hereinabove with reference to, for instance, Fig. 7, but can also be used as adjusting means, to which end, hereto, a winch 50 is to be added. In an earlier described manner, sensors 41 with control means 40 can be added to the buffer means 27. In the upper plate 62, openings 64 are provided through which the cables 53 are guided, while, further, the casing 58 is closed to protect the block 56 and the pulleys 52.

The invention is not in any way limited to the exemplary embodiments described and shown in the drawing. Many variations thereon are possible within the framework of the invention as outlined by the claims.

For instance, the stages can be designed differently and be made suitable for other numbers of windmills, for instance one or two windmills. Also, the stages can be designed such that the windmills are held in a different position, for instance such that the longitudinal axis of the column is at an inclination relative to the vertical. If generators are used which tolerate a horizontal position, the windmills can also be transported completely or largely horizontally, as a result of which, for instance, wind sensitivity will decrease during transport. As a consequence however, there will be a different requirement as to space on the vessel. Also, then, the windmills can be assembled in horizontal condition and subsequently be brought in a vertical position, for instance for placement in a stage 1 or from a deck of a vessel. With a device and method according to the invention, any type of windmill can be placed at sea, while, always, a suitable stage can be manufactured for at least placing and securing the windmills on the vessel for transport. Naturally, the stages can also be fixedly connected to the vessel, while the windmills are placed in the stages on the deck, optionally with the aid of an auxiliary stage.

These and many comparable variations are understood to fall within the framework of the invention as outlined by the claims.

## Claims

1. A method for placing at least one windmill on open water, wherein
- the windmill is built up at least for the greater part on or near land and is supported in a stage;
- the windmill with the stage is placed on a vessel and is transported with the vessel to a set-up position;
- the windmill is taken from the vessel with a hoisting device and is placed on a foundation disposed in the water.

2. A method according to claim 1, wherein a series of windmills, are placed on the vessel and transported to set-up positions.

3. A method according to claim 1 or 2, wherein, near the set-up location, the vessel is supported and stabilized on the floor of the open water, wherein the vessel is at least partly lifted such that the draft of the vessel is reduced.

4. A method according to claim 3, wherein the draft is reduced by more than 10% to less than 100%, more in particular between 20% and 75%, preferably between 20% and 50%.

5. A method according to claim 3, wherein the vessel is lifted completely above the water surface.

6. A method according to claims 3 - 5, wherein the vessel in the lifted position is actively stabilized.

7. A method according to any one of the preceding claims, wherein the hoisting device is transported to the set-up position with the vessel.

8. A method according to claim 7, wherein the hoisting device for placing the windmills is wheeled on the vessel.

9. A method according to any one of the preceding claims, wherein the or each windmill is built up in the stage and, preferably, is wheeled onto the vessel with the stage.

10. A method according to any one of the preceding claims, wherein a series of windmills are built up in stages and are arranged on or near a quay, wherein said series of stages with windmills are wheeled onto a vessel while a further series of windmills are built up in further stages.

11. An apparatus for placing windmills on open water, comprising a vessel with a hoisting device and means for supporting and stabilizing the vessel on the floor of said open water, wherein, on the vessel, at least one stage is provided for carrying at least one substantially assembled windmill.

12. An apparatus according to claim 11, wherein the vessel is provided with a number of legs with which it can be supported on the floor, which legs are arranged for lifting the vessel out of the water at least partly and preferably completely.

13. An apparatus according to claim 12, wherein the stabilizing means are provided with which the vessel in the position at least partly lifted from the water can be stabilized by compensation for swell working on the vessel and/or the legs.

14. An apparatus according to claim 13, wherein the stabilizing means comprise hydraulic or pneumatic means for actively adjusting the length of the legs between the vessel and the floor.

15. An apparatus according to any one of claims 11-14, wherein the at least one stage is detachably coupled to the vessel, such that it can be placed on and be taken from the vessel, preferably in a mobile manner.

16. An apparatus according to claim 15, wherein a series of stages are provided, which can be exchangeably placed on the vessel.

17. An apparatus according to any one of claims 11 - 16, wherein the hoisting device is movable on the vessel.

18. An apparatus according to any one of claims 11-17, wherein the vessel is a pontoon.

19. An apparatus according to any one of claims 11 - 17, wherein the means for supporting and stabilizing the vessel on the floor of said open water comprise buffer means for compensating occurring impact forces on the vessel during use, in particular on the means for supporting and stabilizing.

20. A vessel for placing windmills on open water, comprising a hoisting device and means for supporting and stabilizing the vessel on the floor of said open water, comprising a number of legs with which the vessel can be supported on said floor, which legs are arranged for lifting the vessel out of the water at least partly and preferably completely.

21. A vessel according to claim 20, wherein at least a number of said legs is provided with guide pulleys near a top and a bottom end, cables extending around said pulleys, which cables are connected to a winch and/or to the vessel, such that by operating said winch the cables can be manipulated for lifting said vessel relative to said respective leg.

## Patentansprüche

1. Verfahren zum Platzieren mindestens einer Windmühle auf offenem Wasser, wobei die Windmühle zumindest zum größeren Teil an oder nahe dem Land aufgebaut und in einem Gerüst gehalten wird;
wobei die Windmühle mit dem Gerüst auf einen Schwimmkörper platziert und mit dem Schwimmkörper zu einem Aufstellort transportiert wird;
wobei die Windmühle mittels einer Hebevorrichtung von dem Schwimmkörper genommen und auf ein im Wasser angeordnetes Fundament platziert wird.

2. Verfahren nach Anspruch 1, bei dem eine Reihe von Windmühlen auf den Schwimmkörper platziert und zu Aufstellorten transportiert wird.

3. Verfahren nach Anspruch 1 oder 2, bei dem nahe dem Aufstellort der Schwimmkörper auf dem Grund des offenen Wassers gehalten und stabilisiert wird, wobei der Schwimmkörper mindestens teilweise derart angehoben wird, dass der Tiefgang des Schwimmkörpers reduziert wird.

4. Verfahren nach Anspruch 3, bei dem der Tiefgang um mehr als 10 % bis weniger als 100 %, insbesondere zwischen 20 % und 75 %, vorzugsweise zwischen 20 % und 50 % reduziert wird.

5. Verfahren nach Anspruch 3, bei dem der Schwimmkörper vollständig über die Wasseroberfläche angehoben wird.

6. Verfahren nach Anspruch 3-5, bei dem der Schwimmkörper in der angehobenen Position aktiv stabilisiert wird.

7. Verfahren nach einem der vorhergehenden Ansprüche, bei dem die Hebevorrichtung mit dem Schwimmkörper zu dem Aufstellort transportiert wird.

8. Verfahren nach Anspruch 7, bei dem die Hebevorrichtung zum Platzieren der Windmühlen auf dem Schwimmkörper gerollt wird.

9. Verfahren nach einem der vorhergehenden Ansprüche, bei dem die oder jede Windmühle in dem Gerüst aufgebaut und vorzugsweise mit dem Gerüst auf den Schwimmkörper gerollt wird.

10. Verfahren nach einem der vorhergehenden Ansprüche, bei dem eine Reihe von Windmühlen in Gerüsten aufgebaut und an oder nahe einem Kai angeordnet wird, wobei die Reihe von Gerüsten mit Windmühlen auf einen Schwimmkörper gerollt wird, während eine weitere Reihe von Windmühlen in weiteren Gerüsten aufgebaut wird.

11. Vorrichtung zum Platzieren von Windmühlen auf offenem Wasser, mit einem Schwimmkörper mit einer Hebevorrichtung und Einrichtungen zum Halten und Stabilisieren des Schwimmkörpers auf dem Grund des offenen Wassers, wobei auf dem Schwimmkörper mindestens ein Gerüst zum Tragen mindestens einer im Wesentlichen zusammengebauten Windmühle vorgesehen ist.

12. Vorrichtung nach Anspruch 11, bei der der Schwimmkörper mit einer Anzahl von Beinen versehen ist, mit denen er auf dem Grund gehalten werden kann, wobei die Beine zum zumindest teilweisen und vorzugsweise vollständigen Anheben des Schwimmkörpers aus dem Wasser vorgesehen sind.

13. Vorrichtung nach Anspruch 12, bei der die Stabilisiereinrichtungen vorgesehen sind, mit denen der Schwimmkörper in der zumindest teilweise aus dem Wasser angehobenen Position durch Kompensieren der auf den Schwimmkörper und/oder die Beine wirkenden Dünung stabilisierbar ist.

14. Vorrichtung nach Anspruch 13, bei der die Stabilisiereinrichtungen hydraulische oder pneumatische Einrichtungen zum aktiven Einstellen der Länge der Beine zwischen dem Schwimmkörper und dem Grund aufweisen.

15. Vorrichtung nach einem der Ansprüche 11-14, bei der das mindestens eine Gerüst lösbar derart mit dem Schwimmkörper gekoppelt ist, dass es vorzugsweise auf mobile Weise auf dem Schwimmkörper platzierbar und von dem Schwimmkörper herunternehmbar ist.

16. Vorrichtung nach Anspruch 15, bei der eine Reihe von Gerüsten vorgesehen ist, die austauschbar auf dem Schwimmkörper platzierbar sind.

17. Vorrichtung nach einem der Ansprüche 11-16, bei der die Hebevorrichtung auf dem Schwimmkörper bewegbar ist.

18. Vorrichtung nach einem der Ansprüche 11-17, bei der der Schwimmkörper ein Ponton ist.

19. Vorrichtung nach einem der Ansprüche 11-17, bei der die Einrichtungen zum Halten und Stabilisieren des Schwimmkörpers auf dem Grund des offenen Wassers Puffereinrichtungen zum Kompensieren von bei Verwendung auf den Schwimmkörper, insbesondere auf die Einrichtungen zum Halten und Stabilisieren, wirkenden Stoßkräften aufweisen.

20. Schwimmkörper zum Platzieren von Windmühlen auf offenem Wasser, mit einer Hebevorrichtung und Einrichtungen zum Halten und Stabilisieren des Schwimmkörpers auf dem Grund des offenen Wassers, mit einer Anzahl von Beinen, mit denen der Schwimmkörper auf dem Grund gehalten werden kann, wobei die Beine zum zumindest teilweisen und vorzugsweise vollständigen Anheben des Schwimmkörpers aus dem Wasser angeordnet sind.

21. Schwimmkörper nach Anspruch 20, bei dem mindestens eine Anzahl der Beine mit Führungsrollen nahe einem oberen und einem unteren Ende und mit Kabeln, die um die Rollen verlaufen, versehen sind, wobei die Kabel derart mit einer Winde und/oder dem Schwimmkörper verbunden sind, dass durch Betätigen der Winde die Kabel zum Anheben des Schwimmkörpers relativ zu dem jeweiligen Bein manipulierbar sind.

## Revendications

1. Procédé pour placer au moins une éolienne en pleine mer, dans lequel
- l'éolienne est constituée au moins pour la plus grande partie sur ou près des terres et est supportée sur un échafaudage ;
- l'éolienne, avec l'échafaudage, est placée sur un navire et est transportée avec le navire jusqu'à une position de mise en place ;
- l'éolienne est enlevée du navire à l'aide d'un dispositif de levage et est placée sur des fondations disposées dans l'eau.

2. Procédé selon la revendication 1, dans lequel une série d'éoliennes sont placées sur le navire et transportées jusqu'à des positions de mise en place.

3. Procédé selon la revendication 1 ou 2, dans lequel, près de l'emplacement de mise en place, le navire est supporté et stabilisé sur le fond, en pleine mer, dans lequel le navire est au moins partiellement soulevé de telle manière que le tirant du navire soit réduit.

4. Procédé selon la revendication 3, dans lequel le tirant est réduit de plus de 10 % à moins de 100 %, plus particulièrement, entre 20 % et 75 %, de préférence entre 20 % et 50 %.

5. Procédé selon la revendication 3, dans lequel le navire est soulevé complètement au-dessus de la surface de l'eau.

6. Procédé selon les revendications 3 à 5, dans lequel le navire dans la position soulevée est stabilisé de manière active.

7. Procédé selon l'une quelconque des revendications précédentes, dans lequel le dispositif de levage est transporté jusqu'à la position de mise en place avec le navire.

8. Procédé selon la revendication 7, dans lequel on fait rouler le dispositif de levage destiné à placer les éoliennes sur le navire.

9. Procédé selon l'une quelconque des revendications précédentes, dans lequel la ou chaque éolienne est constituée sur l'échafaudage et, de préférence, on fait rouler celle-ci sur le navire avec l'échafaudage.

10. Procédé selon l'une quelconque des revendications précédentes, dans lequel une série d'éoliennes sont constituées sur des échafaudages et sont agencées sur ou près d'un quai, dans lequel on fait rouler ladite série d'échafaudages avec des éoliennes sur un navire, alors qu'une autre série d'éoliennes sont constituées sur d'autres échafaudages.

11. Appareil destiné à placer des éoliennes en pleine mer, comprenant un navire avec un dispositif de levage et des moyens destinés à supporter et stabiliser le navire sur le fond de ladite pleine mer, dans lequel, sur le navire, au moins un échafaudage est prévu pour porter au moins une éolienne sensiblement assemblée.

12. Appareil selon la revendication 11, dans lequel le navire est prévu avec un certain nombre de jambes grâce auxquelles il peut être supporté sur le fond, lesquelles jambes sont agencées pour soulever le navire hors de l'eau au moins partiellement et de préférence complètement.

13. Appareil selon la revendication 12, dans lequel les moyens de stabilisation sont prévus, grâce auxquels le navire, dans la position au moins partiellement soulevée de l'eau, peut être stabilisé par compensation du travail de houle sur le navire et/ou les jambes.

14. Appareil selon la revendication 13, dans lequel les moyens de stabilisation comprennent des moyens hydrauliques ou pneumatiques destinés à ajuster de manière active la longueur des jambes entre le navire et le fond.

15. Appareil selon l'une quelconque des revendications 11 à 14, dans lequel le au moins un échafaudage est couplé de manière détachable au navire, de telle manière qu'il puisse être placé sur le navire et enlevé de celui-ci, de préférence de manière mobile.

16. Appareil selon la revendication 15, dans lequel une série d'échafaudages sont prévus, qui peuvent être placés de manière échangeable sur le navire.

17. Appareil selon l'une quelconque des revendications 11 à 16, dans lequel le dispositif de levage est déplaçable sur le navire.

18. Appareil selon l'une quelconque des revendications 11 à 17, dans lequel le navire est un ponton.

19. Appareil selon l'une quelconque des revendications 11 à 17, dans lequel les moyens destinés à supporter et stabiliser le navire sur le fond de ladite pleine mer comprennent des moyens tampons destinés à compenser des forces d'impact survenant sur le navire au cours d'une utilisation, en particulier sur les moyens de support et de stabilisation.

20. Navire destiné à placer des éoliennes en pleine mer, comprenant un dispositif de levage et des moyens destinés à supporter et stabiliser le navire sur le fond de ladite pleine mer, comprenant un certain nombre de jambes grâce auxquelles le navire peut être supporté sur ledit fond, lesquelles jambes sont agencées pour soulever le navire hors de l'eau au moins partiellement et de préférence complètement.

21. Navire selon la revendication 20, dans lequel au moins un certain nombre desdites jambes sont prévues avec des poulies de guidage près d'une extrémité supérieure et d'une extrémité inférieure, des câbles s'étendant autour desdites poulies, lesquels câbles sont raccordés à un treuil et/ou au navire, de telle manière qu'en faisant fonctionner ledit treuil, les câbles puissent être manipulés pour soulever ledit navire relativement à ladite jambe respective.
